# EUROPEAN PATENT SPECIFICATION

(11) **EP 1 094 945 B1**
(45) Date of publication and mention of the grant of the patent: **06.05.2004**
(21) Application number: 99939792.0
(22) Date of filing: 04.06.1999
(51) Int. Cl.: B32B 27/12, A47C 21/06, A47G 9/02

(54) **FLEXIBLE SHEET MATERIAL AND METHOD OF MAKING SAME**
FLEXIBLES MATERIAL UND VERFAHREN ZU DESSEN HERSTELLUNG
TISSU DE DRAP SOUPLE ET PROCEDE DE FABRICATION

(30) Priority: 05.06.1998 GB 9812026
(43) Date of publication of application: 02.05.2001
(73) Proprietor: Dartex Coatings Limited, Long Eaton, Nottinghamshire NG10 1FZ (GB)
(72) Inventor: MCKNIGHT, Jo, Long Eaton, Nottingham NG10 1FX (GB); AMBROSE-JONES, Shaun, Long Eaton, Nottingham NG10 1FX (GB)
(74) Representative: Shaw, Laurence
(86) International application number: PCT/GB1999/001756
(87) International publication number: WO 1999/064238

(56) References cited:
- EP-A- 0 045 592
- EP-A- 0 403 187
- DE-A- 3 245 196
- DE-U- 9 313 654
- GB-A- 2 012 159
- GB-A- 2 186 233
- GB-A- 2 189 993
- US-A- 3 881 489
- US-A- 4 781 962

## Description

This invention is concerned with flexible sheet material and method of making same.

In caring for patients in hospital, pressure-sores (often called bedsores and more correctly known as decubitus) are a potential problem. Additionally patients may also be incontinent or have exuding wounds. To try to protect patients from the risk of pressure-sores and prevent fluid transfer to the underlying mattress and any resulting cross-infection, various sheets or cover sheets have been introduced. Such protective sheets are, of necessity, impermeable to fluids microbes and pathogens. Moreover, to reduce the risk of pressure-sore development, the sheet needs also a certain amount of stretch, thereby reducing interface pressures on the patient's most vulnerable areas.

To this end, varying solutions have been proposed, including both "static" and "dynamic" systems. Whereas the static systems may operate as a sprung or foam block mattress with a cover sheet, the dynamic systems are inflatable and often consist of a series of cells, which are sequentially deflated so as to further reduce the interface pressure exerted on the various parts of the patient's body. Such mattresses have been successful in reducing the incidence of pressure sores and inhibiting their progression.

A further complication to this issue is that, as a result of the sheet cover being impermeable, the patient's skin can be in direct contact with fluids, which can inhibit the healing process. For wounds (including pressure sores) to heal most effectively, they need to be exposed to a reasonable amount of air, and not left in contact with moisture.

In order for a material to be suitable for use as a protective mattress cover, it should preferably have the following properties: impermeability to liquid, good heat transmission, flexibility, resilience, stretch and recovery. This allows such materials to readily respond to the contours of the patient's body.

One of the various objects of the present invention is to provide a flexible sheet material through which air can be delivered.

Another of the various objects of the present invention is to provide an improved flexible sheet material suitable for use as a mattress cover.

Another object of the present invention is to provide a flexible sheet material suitable for use as a patient-contacting sheet material to enable control of air transfer to regions of the sheet material which might come into contact with a patient's body.

In one aspect the invention provides a flexible laminated sheet material comprising an air-permeable first layer, a second layer being substantially air-impermeable but having a controlled air permeability at a selected part of the second layer, the second layer being laminated to one face of the first layer, and a third layer laminated to the face of the first layer opposite that carrying the second layer, the third layer being air-impermeable and the first layer being permeable to air in a direction parallel to the surface of the sheet material and in a direction extending transversely to the surface of the sheet material.

Preferably the second layer comprises an air-impermeable material having a set of perforations therethrough at the selected part.

Preferably, the first layer is a textile material, conveniently a relatively extensible, flexible and resilient textile material; suitably the textile material is preferably knitted (but may be woven or a 'non-woven' provided that they have the necessary characteristics - stretch is specially important) and is relatively open textile material with high loft to provide the desired air permeability characteristics.

Preferably, the second layer is a relatively extensible, flexible and resilient impermeable plastics material, suitably a polyurethane composition. Such compositions are typically polyester or polyether prepolymers extended by means of aliphatic or aromatic polyisocyanates in combination with polyhydroxyl or polyamine compounds. The resulting elastomers may be applied as solutions, emulsions, in molten or prepolymerised forms. The second layer is preferably of uniform thickness, to minimise the risk of any thin regions being present in the second layer which may lead to unwanted leakage through the second layer.

The perforations may be of different dimensions in a first region of the selected part from those in a second region, the perforations in the first region suitably being larger than those in the second region. Conveniently, the perforations in the first region each have a diameter between 0.2 mm and 1 mm and the perforations in the second region have a diameter between 0.1 mm and 6 mm.

The airflow through the perforated regions of the sheet material in accordance with the invention is preferably sufficient to give satisfactory ventilation.

The first region of perforations extends lengthwise along a central part of the sheet material and the second region extends lengthwise along a central part of the sheet material and the second region extends lengthwise at either side of the central part. Conveniently, the central part is between 25 cm and 35 cm in width preferably about 30 cm. Conveniently each part of the second region at either side of the first region is between 7.5 cm and 15 cm wide, preferably about 10 cm. The combined width of the first and second regions is preferably between 40 cm and 65 cm, more preferably between 50 cm and 60 cm. In the first region the perforations are preferably between 0.1 and 1.6 mm in diameter, more preferably between 0.2 mm and 1 mm. The perforations in the second region are preferably between 0.1 and 0.6 mm.

Alternatively, the perforations may all be of the same size, in which case the perforations are preferably between 0.1 mm to 1.6 mm in diameter, more preferably between 0.6 to 1.2 mm.

Conveniently, the third layer is a polyurethane composition. Although polyurethane compositions are preferred for use as the second or third layers, other materials, for example PVC, synthetic rubber or acrylics, may prove suitable for use in materials in accordance with the invention provided that they have the necessary characteristics.

Although the perforations described herein are generally circular, other shapes might be used provided that their areas are appropriate. Thus, if other shapes are used in materials otherwise similar to the first or second materials, their areas may correspond with the areas of the preferred circular perforations.

In another aspect the invention provides a method of making a laminated sheet material comprising a sheet material as defined, wherein all the perforations are to the range of 0.1 mm to 1.6 mm in diameter, preferably 0.6 mm to 1.2 mm.

Preferably, in carrying out a method in accordance with the invention the first layer is a textile material, preferably a knitted textile fabric which is of open construction and high loft and is flexible, resilient and extensible. Preferably, the second layer is an impermeable plastics sheet material, suitably a polyurethane composition and is preferably flexible, extensible and resilient.

Preferably, the second layer is laminated with the first layer, more preferably by transfer coating but other laminating techniques may be used, eg. hot melt, adhesive spot techniques or pressure sensitive adhesive films. In transfer coating the second layer is formed by coating a support substrate, conveniently a release paper, with a layer of coating material of uniform thickness by any well known coating technique, the coating material conveniently being a polyurethane composition. The coating material is then cured or allowed to cure to form a flexible sheet of uniform thickness; more than one layer of coating material may be applied if desired. A thin adhesive (or tie) coat is then applied to the surface opposite the substrate and the first layer is brought into contact with the tie coat and pressed gently against it, thereafter being cured or allowed to cure to securely laminate the first layer and second layer to one another. Laminating by transfer coating avoids undue penetration of the first layer thus militating against undesirable reduction in flexibility or, extensibility resilience of the finished sheet material.

The perforations may be made by any suitable technique but are preferably made using a laser system after the first and second layers have been laminated to one another, the laser being chosen to perforate the second layer at selected positions but to not perforate or significantly affect the first layer. Although the perforations could be made whilst the second layer is still supported by the substrate prior to being laminated with the first layer, that is not preferred.

In perforating the second layer, the perforations are chosen to be such that the ratio of area of the perforations in the selected perforated part to the area of solid material in the selected part ranges between 1:5 cm² and 1:50 cm². However, the ratio of the area of the perforations to the area of the solid material of the selected part of the second layer may be varied according to the airflow which is desired through the perforations.

In a method in accordance with the invention of making the first sheet material in accordance with the invention, a third layer is laminated to a face of the first layer opposite that to which the second layer is laminated, preferably by transfer coating. The third layer is air-impermeable and of uniform thickness, to minimise the risk that unwanted leakage of air through the third layer may arise.

The second sheet material in accordance with the invention is produced by terminating the method after laminating the first and second layer and perforating the second layer.

Material in accordance with the invention may be used in the manufacture of cover sheets for mattresses and for other purposes where it is desirable to supply a controlled flow of air to preselected locations. For example, material in accordance with the invention comprising three layers may be utilised in the manufacture of a body suit with the second layer on the inside, for treatment of patients suffering from hypothermia where warm air may be supplied through the perforations to the interior of the suit.

There now follows a detailed description to be read with reference to the accompanying drawings of a flexible sheet material embodying the invention, and a method of making the sheet material likewise embodying the invention. It will be realised that the sheet material and methods have been selected for description to illustrate the invention by way of example. Although the second and third layers of a preferred sheet material in accordance with the invention are of uniform thickness with a set of perforations through the second layer at a selected part, other materials having controlled air permeability may be used. For example such materials (conveniently polyurethane compositions) may be made by coagulation techniques to form a microporous second layer, or other techniques for forming microporous sheet materials; such materials where construction permits, have characteristics similar to those referred to herein in respect of sheet material in accordance with the invention set out in Claim 1.

Irrespective of the manner in which the sheet material is rendered air permeable, to deliver a controlled air flow it is important to select suitable air transmission characteristics at the selected part of the material. Thus, for example, the air permeability should be sufficient to deliver a desired air flow rate eg. where the material is to be used to ventilate a patient.

Furthermore, where the material is to be used as a mattress cover the sheet material may be adapted to provide at least two lengthwise extending air permeable regions, a first region extending along a central part of the sheet material and a second (or further) regions at either side of the central region; the central region conveniently has a greater air flow capacity than the second (or other) regions whereby to facilitate the ventilation of desired parts of the body of a patient supported on the sheet material.

Alternatively, when used as a mattress cover, the perforations may be arranged in an array centrally located relating to the mattress so as to correspond to that area which supports the torso region of a person lying on the mattress.

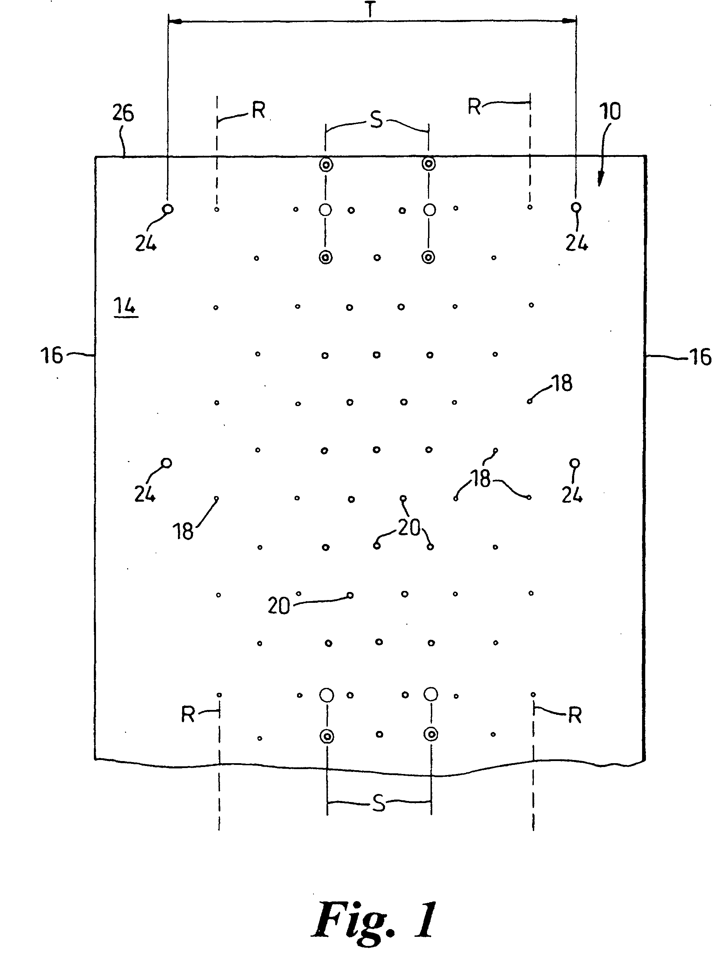

In the accompanying drawings:-
Figure 1 is a diagrammatic plan view showing a first sheet material embodying the invention; and
Figure 2 is a view of the first sheet material embodying the invention showing a perforated part of the material on a larger scale.
Figure 3 is a diagrammatic plan view of a further sheet material embodying the invention;
Figure 4 is a part sectional view taken along line IV-IV in Figure 3;
Figure 5 is a diagrammatic plan view of a strip of the sheet material shown in figure 3.

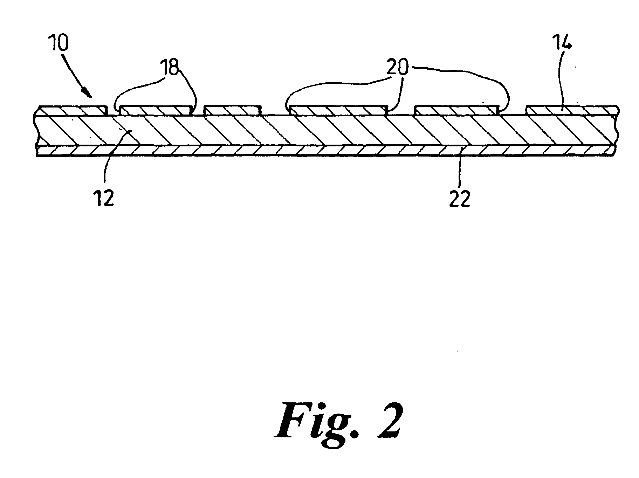

The first illustrative sheet material 10 is a flexible, resilient material and comprises an air permeable first layer 12 (see Figure 2). The first layer 12 is a loosely knitted high loft textile fabric which is relatively open in structure and is between 200 and 1000 micrometers in uncompressed thickness, more preferably between 200 and 600 micrometers and conveniently about 400 micrometers; the thickness depends on the end use to which it is intended to put the material. The textile fabric which provides the first layer 12 is readily permeable to air considered in a direction parallel to the surface of the sheet material 10, as well as in a direction transverse to the sheet material 10.

The first layer 12 is laminated to a second layer 14 which is of uniform thickness but has a set of perforations 18, 20 extending through a selected part of the second layer 14. The selected part of the first sheet material 10 is indicated by dashed lines R which are parallel with opposite parallel edges 16 of the sheet material. The perforations 18, 20 are of different dimensions and are grouped in two regions. A first, central region lies between lines S parallel with the lines R and extends lengthwise. along a central part of the sheet material 10; the perforation 20 are disposed in the first region. The perforations 18 are disposed in a second region which extends at either side of the first region lengthwise of the sheet material, the second region being disposed between one of the lines R and the adjacent line S. The perforations 20 in the first region are larger than those 18 in the second region and both sets of perforations are generally circular; however, the perforations may all have the same diameter or be of greater diameters according to the use to which the sheet material is to be put.

In the first illustrative sheet material the perforations 20 are preferably between 0.1 and 1.6 mm in diameter, more preferably between 0.2 and 1 mm in diameter. The perforations 18 are preferably also between 0.1 and 1.6 mm in diameter and more preferably between 0.1 and 0.6 mm in diameter.

The first illustrative sheet material further comprises a third layer 22 on the face of the layer 12 opposite the face carrying the second layer 14. The third layer is air-impermeable and provided by a polyurethane film of uniform thickness.

The second and third layers 14, 22 are conveniently of the same thickness (but may be of different thicknesses) preferably between 20 and 100 micrometers thick and more preferably between 20 and 60 micrometers thick, suitably about 40 micrometers.

In order to enable air to be introduced between layers 14, 22, the first illustrative sheet material further comprises larger openings 24 in marginal regions of the sheet material 10 adjacent the edges 16. The openings 24 conveniently are of about 30 mm diameter and the openings 24 in the second layer 14 may be provided by complete removal of the second layer 14 for the whole of the diameter of the opening 24 or by a series of closely adjacent holes within the boundary defining the opening 24.

The first illustrative sheet material 16 has an air impermeable seal along the opposite edges 16.

A second sheet material embodying the invention is generally similar to the first illustrative sheet material described above except that the third layer 22 is omitted as are the openings 24 in the surface 14, and as is the impermeable seal along the edges 16, 26.

The first and second illustrative sheet materials are made by carrying out a method embodying the invention. In carrying out the first illustrative method a suitable air permeable textile fibre fabric is procured to provide the first layer. The textile fibre fabric is conveniently supplied in a continuous length wound on a roll from which it is withdrawn to provide the first layer.

The second layer is made by coating a substrate with a layer of suitable polyurethane coating composition to provide on the substrate a polyurethane composition coating having a uniform thickness. The substrate is suitably a paper with a release surface. The paper may conveniently be supplied from a roll and the polyurethane coating coated onto the release surface by known coating techniques. The polyurethane coating is then cured to provide on the substrate a film of polyurethane of uniform thickness to form the second layer. If desired a plurality of separate polyurethane coatings may be applied to form a multi-coat second layer. The second layer is then coated with a thin tie coat which may be a further polyurethane composition (or other suitable adhesive eg. acrylic) but of much less thickness than the film which provides the second layer. Whilst the tie coat is still in a soft and tacky condition it is brought into engagement with the first layer and gently pressed thereagainst, the tie coat then being cured to laminate the second layer 14 to the first layer. This method of applying a surface coating to a substrate is commonly referred to as transfer coating. The first and second layers may be laminated together in this way to provide a continuous laminated sheet material.
In making the first illustrative sheet material, in carrying out this illustrative method, a third layer 22 provided by a polyurethane composition is applied to the first layer on the opposite face from that on which the second layer 14 is applied by a transfer coating technique, similar to that of the lamination of the first and second layers; the second layer 14 will, usually, have been separated from the support substrate prior to laminating with the third layer.

The perforations 18, 20 (and where appropriate openings 24) are preferably formed in the second layer after it has been laminated to the first layer and has been separated from the release coat carried by the substrate on which the second layer is coated, but before the third layer is laminated on the opposite face of the first layer.

The second layer is perforated using a laser system which is able to perforate the second layer 14 at the required locations and with perforations of the required diameter, as the sheet material comprising the first and second layers is moved through the laser system operating simultaneously in line with the coating system (although this may be a separate, remote operation, if required), in a continuous production technique (rather than a batch processing technique). A suitable laser system is available from the Spanish company MACSA under the trade name MAC2000 CO₂, which includes a CO₂ sealed laser having a wavelength of 10.6 micrometers. The same laser system may be used to produce the openings 24 in the layer 14 where necessary .

If the second illustrative material is to be produced, provision of the openings 24 is not necessary and it is not necessary to laminate the third layer to the first layer 12.

Should the illustrative method be employed to produce the first illustrative material then it will be necessary to form the openings 24 and to laminate the third layer 22 to the first layer as outlined above.

In carrying out the illustrative method of making the first illustrative material it is necessary to form an air impermeable seal along the opposite lengthwise edges 16 of the sheet material produced and this can be done by any convenient means, for example ultrasonic welding or high frequency welding, use of an impermeable tape folded round the edge and sealed to the second and third layers, heat sealing or any other suitable sealing system.

Where the illustrative materials are to be used to provide mattresses covers the width of the sheet material between the opposite edges 16 is conveniently between 85 and 150 cm, preferably between 85 cm and 120 cm. The region between the lines R in which the perforations are to be formed is suitably between 40 cm and 65 cm in width, preferably between 50 cm and 60 cm in width. Where openings 24 are formed in the second layer 14 they are conveniently closer to the perforated region R than the edges 16 of the fabric and the spacing between the openings is conveniently between 70 cm and 95 cm, preferably between 75 cm and 85 cm, depending on the width of the perforated region between the lines R.

Where one of the illustrative sheet materials is to be used as a cover for a mattress it is cut into discrete lengths, suitably between 140 cm and 360 cm in length and preferably between 210 cm and 250 cm in length.

For the first illustrative sheet material the transverse cut edges such as the edge 26 must be sealed together by any suitable means for example as used to seal the edges 16 in carrying out the illustrative method to create an airtight seal between the second and third layers. If desired the lengthwise edges 16 may also be sealed during manufacture of the cover instead of when making the first illustrative sheet material. For each such mattress cover there are conveniently five openings 24 along each side of the cover. Connecting means may be sealed to the layer 14 around the openings 24 to provide a supply of air under pressure to the openings 24.

In use of a cover comprising the first illustrative sheet material the cover is placed on a mattress with the second layer 14 uppermost and air under pressure is supplied to the openings 24. The air then permeates through the first layer between the second and third layers and the air escapes through any of the openings 18, 20 which are not completely closed by the patient's body. In mattress systems utilising pockets which are inflated sequentially, those of the perforations 18, 20 which are aligned with a deflated pocket will not be closed off by the patient's body which will be supported only by the inflated pockets and thus air can leak from the unclosed perforations 18, 20 to ventilate the exposed regions of the patient's body. When the previously deflated pockets are re-inflated the patient's body will be supported by the inflated pockets and the corresponding perforations 18, 20 will partially be closed by the patient's body but as others of the pockets deflate, those of the perforations 18, 20 corresponding with the deflated pockets will be open and ventilate the adjacent parts of a patient's body in this way. Thus, the whole of the patient's body can be ventilated in parts sequentially.

Because the air is supplied from edge regions of the covers formed from the first illustrative sheet material, there will tend to be an air pressure drop across the material from the edge regions towards the centre. The perforations 20 in the centre therefore are of larger diameter than those perforations 18 closer to the edges 16 to facilitate an even distribution of the air escaping from the perforations across the perforated region of the sheet material. If desired there can be perforations of several different diameters, the smallest diameter perforations being closest to the edges 16 and the perforations being of progressively larger diameter towards the centre of the sheet material. The sizes of the perforations 18, 20 are chosen to provide the required air distribution in the use of the material.

The third layer of the first illustrative sheet material not only provides an air impermeable backing layer so that air introduced under pressure through the openings 24 is forced to escape through the perforations 18, 20 but also ensures that no body fluids leak through the cover sheet onto the underlying mattress, thus keeping the underlying mattress clean and sterile.

After use the cover sheet may be disposed of for hygiene reasons.

Although in the first illustrative sheet material, the openings 24 are provided in the second layer 14 for the introduction of air under pressure, the openings for introduction of air under pressure could if more convenient, be formed in the third layer.

The second illustrative sheet material comprising only the first and second layers may be used in forming an inflatable mattress cover by forming a cover of the second illustrative and sealing the cover sheet to an impermeable backing material around the lengthwise and transverse edges of the cover sheet to form an envelope with the second illustrative material forming one face. Air under pressure may then be introduced into the envelope formed between the cover sheet and the backing layer to inflate the envelope, the air under pressure leaking gradually from the perforations 18, 20 to ventilate the body of a patient lying on the cover.

In this case, where the second illustrative sheet material forms one side of an inflatable envelope, the perforations 18, 20 may all be of the same diameter or may vary in a manner similar to those of the first illustrative sheet material..

The region of the illustrative sheet material in which the perforations are formed are chosen to be of sufficient width to provide adequate ventilation to the bodies of patients who will lie on a cover sheet formed from the material.

Sheet materials generally similar to the illustrative materials can be used for purposes other than mattress covers as the sheet materials have an engineered permeability, the air permeability of the materials in accordance with the invention being able to be closely controlled in accordance with the end use requirements.

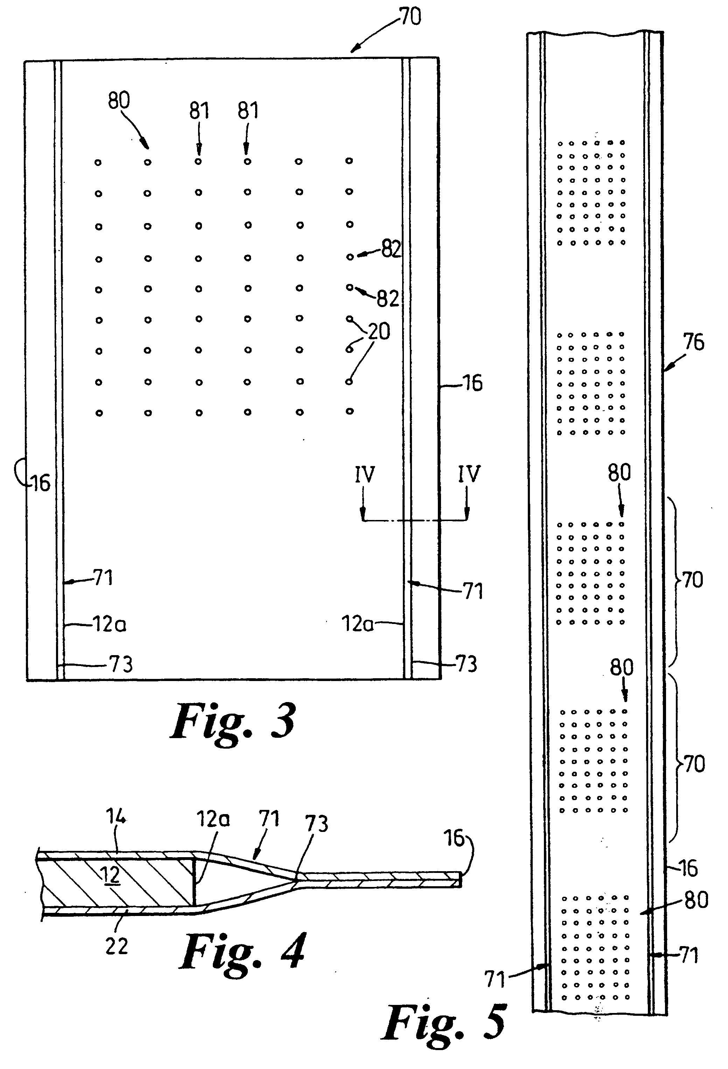

An alternative arrangement for introducing air in between layers 14, 22 is provided in the embodiment 70 illustrated in Figures 3 to 5.

In embodiment 70, a pair of longitudinally extending ducts 71 are preferably provided.

Preferably each duct 71 is formed by a longitudinal edge 12a of the first layer 12 and a seal line 73 formed between layers 14, 22. Accordingly in between edge 12a and a seal line 73 layers 14, 22 from an open space therebetween and so define a duct 71.

Air is introduced at one or both ends of each duct 71 and permeates into the fabric layer 12 from edge 12a.

Preferably the layers 14, 22 are laminated together over the marginal region between seal line 73 and the adjacent edge 16. Preferably the marginal region has a width of about 50 mm.

Preferably the width of each duct 71 (ie the distance between edge 12a and seal line 73) is between 15 to 30 mm, more preferably between 20 to 25 mm.

The ducts 71 extend longitudinally of the sheet and so can conveniently be incorporated integrally with the sheet 70 during the manufacturing process as is illustrated in Figure 5 wherein a strip 76 of sheets 70 joined end to end are initially produced, the strip 76 being severed to form individual sheets 70.

In the illustrated embodiment 70, a pair of ducts 71 are provided. It will be appreciated that only one or more than two longitudinally extending ducts 71 may be provided.

In sheets 70, perforations 20 only are provided, preferably in an array 80 comprising columns 81 and rows 82. Preferably the array 80 covers an area centrally of the sheet 70 which corresponds to that area which will support the torso of a person lying on a mattress covered by sheet 70.

Preferably the array 80 has a length of between 900 to 1100 mm, and has a width of between 400 to 430 mm.

Preferably the array 80 comprises about nine rows 82, the spacing between adjacent rows 82 being about 120 mm.

The array 80 may comprise six columns 81, the spacing between adjacent columns 81 being about 85 mm.

Alternatively, the array 80 may comprise ten columns 81; the spacing between adjacent columns 81 being about 45 mm.

Preferably the perforations 20 defining the array 80 are of the same size, and preferably are between 0.1 mm to 1.6 mm in diameter, more preferably between 0.6 to 1.2 mm.

Alternatively, it is envisaged that the array 80 may extend continuously for substantially the entire length of sheet 70. Alternatively, more than one array 80 may be provided for each sheet 70, the arrays 80 being spaced from one another in the longitudinal direction of the sheet 70.

## Claims

1. A flexible laminated sheet material comprising an air-permeable first layer, a second layer being substantially air-impermeable but having a controlled air permeability at a selected part of the second layer, the second layer being laminated to one face of the first layer, and a third payer laminated to the face of the first layer opposite that carrying the second layer, the third layer being air-impermeable and the first layer being permeable to air in a direction parallel to the surface of the sheet material and in a direction extending transversely to the surface of the sheet material.

2. A sheet material according to Claim 1, wherein the second layer is of uniform thickness.

3. A sheet material according to Claim 2 wherein the second layer comprises an air-impermeable material having a set of perforations therethrough at the selected part.

4. A sheet material according to Claim 3, wherein all the perforations. are to the range of 0.1 mm to 1.6 mm in diameter, preferably 0.6 mm to 1.2 mm.

5. A sheet material according to any of Claims 1 to 4, wherein the first layer is a textile fabric.

6. A sheet material according to Claims 3, 4 or 5 wherein the second layer in a polyurethane composition.

7. A sheet material according to Claim 3 wherein the selected part comprises a first region and a second region and wherein the perforations are of different dimensions in the first region from those in the second region.

8. A sheet material according to Claim 6 wherein the perforations in the first region are larger than those in the second region.

9. A sheet material according to Claim 8 wherein the perforations in the first and second region each have a diameter between 0.1 mm and 1.6 mm.

10. A sheet material according to Claim 9 wherein the first region extends lengthwise along a central part of the sheet material and the second region extends lengthwise at either side of the central part.

11. A sheet material according to any preceding claim wherein the third layer is a polyurethane composition.

12. A sheet material according to any preceding claim wherein one or more longitudinally extending ducts are provided between the second and third layers for ducting air under pressure to the first layer.

13. A sheet material according to any of Claims 1 to 11 comprising one or more openings in the second layer through which air under pressure can be supplied to the first layer.

14. A method of making a laminated sheet material comprising:-
(a) procuring an air permeable first layer;
(b) laminating to one face of the first layer, an air-impermeable second layer comprising a material of uniform thickness;
(c) laminating to the face of the first layer opposite to the face carrying the second layer, an air-impermeable third layer of uniform thickness; and
(d) forming a set of perforations through the second layer at a selected part thereof.

15. A method according to Claim 14 wherein the first layer is a textile fabric.

16. A method according to either one of Claims 14 and 15 wherein the second layer is a polyurethane composition.

17. A method according to any one of Claims 14 to 16 wherein the perforations are made by perforating the second layer after the first and second layers have been laminated to one another.

18. A method according to any one of Claims 14 to 17 wherein the perforations in a first region of the selected part are of different dimensions from those in a second region.

19. A method according to any one of Claims 14 to 18 wherein the second layer is laminated with the first layer by transfer-coating.

20. A method according to any one of Claims 14 to 19 wherein the third layer is laminated with the first layer by transfer-coating.

## Patentansprüche

1. Flexibles laminiertes Flächenmaterial mit einer luftdurchlässigen ersten Schicht, einer zweiten Schicht, die im Wesentlichen luftundurchlässig ist, jedoch in einem ausgewählten Teil eine gesteuerte Luftdurchlässigkeit aufweist, wobei die zweite schicht auf eine Seite der ersten Schicht laminiert ist, und mit einer dritten Schicht, welche auf diejenige Seite der ersten Schicht laminiert ist, die der die zweite Schicht tragenden Seite entgegengesetzt ist, wobei die dritte Schicht luftundurchlässig und die erste Schicht für Luft in einer Richtung parallel zur oberfläche des Flächenmaterials und in einer Richtung quer zur Oberfläche des Flächenmaterials durchlässig ist.

2. Flächenmaterial nach Anspruch 1, worin die zweite Schicht eine gleichmäßige Dicke aufweist.

3. Flächenmaterial nach Anspruch 2, worin die zweite Schicht ein luftundurchlässiges Material aufweist, das mit einem Satz von Perforationen in dem ausgewählten Teil versehen ist.

4. Flächenmaterial nach Anspruch 3, worin alle Perforationen in einen Durchmesserbereich von 0,1 bis 1,6 mm, vorzugsweise von 0,6 bis 1,2 mm, liegen.

5. Flächenmaterial nach einem der Ansprüche 1 bis 4, worin die erste Schicht ein Textilmaterial ist.

6. Flächenmaterial nach Anspruch 3, 4 oder 5, worin die zweite Schicht aus einer Polyurethanzusammensetzung besteht.

7. Flächenmaterial nach Anspruch 3, worin der ausgewählte Teil einen ersten Bereich und einen zweiten Bereich aufweist sowie die Abmessungen der Perforationen im ersten Bereich von jenen im zweiten Bereich verschieden sind.

8. Flächenmaterial nach Anspruch 6, worin die Perforationen im ersten Bereich größer sind als jene im zweiten Bereich.

9. Flächenmaterial nach Anspruch 8, worin die Perforationen im ersten und im zweiten Bereich jeweils einen Durchmesser zwischen 0,1 und 1,6 mm aufweisen.

10. Flächenmaterial nach Anspruch 9, worin sich der erste Bereich der Länge nach entlang eines Mittelteils des Flächenmaterials und sich der zweite Bereich der Länge nach an beiden Seiten des Mittelteils erstreckt.

11. Flächenmaterial nach einem der vorstehenden Ansprüche, worin die dritte Schicht aus einer Polyurethanzusammensetzung besteht.

12. Flächenmaterial nach einem der vorstehenden Ansprüche, worin zwischen der zweiten und der dritten Schicht eine oder mehrere sich längs erstreckende Leitungen zum Führen von Luft unter Druck zur ersten Schicht hin vorgesehen sind.

13. Flächenmaterial nach einem der Ansprüche 1 bis 11 mit einer oder mehreren Öffnungen in der zweiten Schicht, durch welche Luft unter Druck der ersten Schicht zugeführt werden kann.

14. Verfahren zum Herstellen eines laminierten Flächenmaterials mit den folgenden Stufen:
(a) Bereitstellen einer luftdurchlässigen ersten Schicht;
(b) Laminieren einer luftundurchlässigen zweiten Schicht, die ein Material mit einer gleichmäßigen Dicke aufweist, auf eine Seite der ersten Schicht;
(c) Laminieren einer luftundurchlässigen dritten Schicht mit einer gleichmäßigen Dicke auf diejenige Seite der ersten Schicht, welche der die zweite Schicht tragenden Seite entgegengesetzt ist; und
(d) Ausbilden eines Satzes von Perforationen durch die zweite Schicht hindurch in einem ausgewählten Teil hiervon.

15. Verfahren nach Anspruch 14, worin die erste Schicht ein Textilmaterial ist.

16. Verfahren nach einem der Ansprüche 14 und 15, worin die zweite Schicht aus einer Polyurethanzusammensetzung besteht.

17. Verfahren nach einem der Ansprüche 14 bis 16, worin die Perforationen durch Perforieren der zweiten Schicht hergestellt worden sind, nachdem die erste Schicht und die zweite Schicht aneinander laminiert worden sind.

18. Verfahren nach einem der Ansprüche 14 bis 17, worin die Perforationen in einem ersten Bereich des ausgewählten Teils im Vergleich zu jenen in einem zweiten Bereich unterschiedliche Abmessungen aufweisen.

19. Verfahren nach einem der Ansprüche 14 bis 18, worin die zweite Schicht durch Beschichtungsübertragung auf die erste Schicht laminiert wird.

20. Verfahren nach einem der Ansprüche 14 bis 19, worin die dritte Schicht durch Beschichtungsübertragung auf die erste Schicht laminiert wird.

## Revendications

1. Matériau en feuille souple déposé en couche comprenant une première couche perméable à l'air, une deuxième couche qui est sensiblement imperméable à l'air, mais ayant une perméabilité à l'air contrôlée au niveau d'une partie sélectionnée de la deuxième couche, la deuxième couche étant déposée en couche sur une face de la première couche, et une troisième couche déposée en couche sur la face de la première couche opposée qui supporte la deuxième couche, la troisième couche étant imperméable à l'air et la première couche étant perméable à l'air dans une direction parallèle à la surface de la feuille et dans une direction s'étendant transversalement par rapport à la surface de la feuille.

2. Matériau en feuille selon la revendication 1, dans lequel la deuxième couche a une épaisseur uniforme.

3. Matériau en feuille selon la revendication 2, dans lequel la deuxième couche comprend un matériau imperméable à l'air ayant un ensemble de perforations à travers celui-ci au niveau d'une partie sélectionnée.

4. Matériau en feuille selon la revendication 3, dans lequel toutes les perforations ont un diamètre compris entre 0,1 mm et 1,6 mm, de préférence compris entre 0,6 mm et 1,2 mm.

5. Matériau en feuille selon l'une quelconque des revendications 1 à 4, dans lequel la première couche est une étoffe de textile.

6. Matériau en feuille selon les revendications 3, 4 ou 5 dans lequel la deuxième couche est une composition de polyuréthane.

7. Matériau en feuille selon la revendication 3, dans lequel la partie sélectionnée comprend une première région et une seconde région et dans lequel les perforations sont de différentes dimensions dans la première région par rapport à celles de la seconde région.

8. Matériau en feuille selon la revendication 6, dans lequel les perforations dans la première région sont plus grandes que celles situées dans la seconde région.

9. Matériau en feuille selon la revendication 8, dans lequel les perforations dans la première et la seconde région ont chacune un diamètre compr is entre 0,1 et 1,6 mm.

10. Matériau en feuille selon la revendication 9, dans lequel la première région s'étend dans le sens de la longueur le long d'une partie centrale du matériau en feuille et la seconde région s'étend dans le sens de la longueur de chaque côté de la partie centrale.

11. Matériau en feuille selon l'une quelconque des revendications précédentes, dans lequel la troisième couche est une composition de polyuréthane.

12. Matériau en feuille selon l'une quelconque des revendications précédentes, dans lequel on prévoit un ou plusieurs conduits s'étendant longitudinalement entre les deuxième et troisième couches pour conduire de l'air sous pression vers la première couche.

13. Matériau en feuille selon l'une quelconque des revendications 1 à 11 comprenant une ou plusieurs ouvertures dans la deuxième couche à travers lesquelles l'air sous pression peut être alimenté à la première couche.

14. Procédé de fabrication d'un matériau en feuille déposé en couche, comprenant les étapes consistant à :
(a) proposer une première couche perméable à l'air ;
(b) déposer en couche sur une face de la première couche, une deuxième couche imperméable à l'air comprenant un matériau d'épaisseur uniforme ;
(c) déposer en couche sur la face de la première couche opposée à la face supportant la deuxième couche, une troisième couche imperméable à l'air d'épaisseur uniforme ; et
(d) former un ensemble de perforations à travers la deuxième couche au niveau d'une partie sélectionnée de celle-ci.

15. Procédé selon la revendication 14, dans lequel la première couche est une étoffe de textile.

16. Procédé selon l'une quelconque des revendications 14 ou 15, dans lequel la deuxième couche est une composition de polyuréthane.

17. Procédé selon l'une quelconque des revendications 14 à 16, dans lequel les perforations sont réalisées en perforant la deuxième couche après que les première et deuxième couches ont été déposées en couche l'une sur l'autre.

18. Procédé selon l'une quelconque des revendications 14 à 17, dans lequ el les perforations dans une première région de la partie sélectionnée sont de différentes dimensions par rapport à celles situées dans une seconde région.

19. Procédé selon l'une quelconque des revendications 14 à 18, dans lequel la deuxième couche est déposée en couche avec la première couche grâce au revêtement par transfert.

20. Procédé selon l'une quelconque des revendications 14 à 19, dans lequel la troisième couche est déposée en couche avec la première couche grâce au revêtement par transfert.
